# EUROPÄISCHE PATENTSCHRIFT

(11) **EP 0 541 955 B1**
(45) Veröffentlichungstag und Bekanntmachung des Hinweises auf die Patenterteilung: **27.12.1995**
(21) Anmeldenummer: 92117046.0
(22) Anmeldetag: 06.10.1992
(51) Int. Cl.: B60Q 1/56, B60Q 1/26

(54) **Fahrzeugleuchte**
Vehicle headlamp
Phare pour véhicule

(30) Priorität: 15.11.1991 DE 4137612
(43) Veröffentlichungstag der Anmeldung: 19.05.1993
(73) Patentinhaber: Hella KG Hueck & Co., 59552 Lippstadt (DE)
(72) Erfinder: Thiemann, Hubert, W-4780 Lippstadt (DE); Brandherm, Rolf, W-4831 Langenberg (DE); Vögeler, Franz-Josef, W-4780 Lippstadt (DE)

(56) Entgegenhaltungen:
- FR-A- 2 143 497
- GB-A- 2 170 310

## Beschreibung

Die Erfindung betrifft eine außen am Fahrzeug anbringbare Leuchte, insbesondere Kennzeichenleuchte, mit einem die Lichtscheibe enthaltenden rechteckförmigen Gehäuseoberteil und einem die Leuchte von hinten verschließenden, die elektrischen Anschlüsse und Kontaktteile für die Glühlampe tragenden Gehäuseunterteil.

Aus dem DE-U-6 936 098 ist eine Anbauleuchte bekannt, bei der die Verrastung zwischen Lichtgehäuse und Grundplatte mittels elastischer Zungen außen am Lichtgehäuse erfolgt. Neben der Beeinträchtigung des äußeren Erscheinungsbildes der Leuchte erfordert sie zur öffnung des Gehäuses Werkzeug, um beispielsweise die Glühlampe auszuwechseln. Eine Veränderung der elastischen Zungen dahingehend, sie griffartiger zu gestalten, entbehrt zwar das Werkzeug, schafft aber eine erhöhte Verletzungsgefahr und bietet außerdem Nester für Schmutzablagerungen. Eine Abhilfe dieser vorhergenannten Nachteile erfolgt zwar in dem DE-U-7 739 340, in dem die federnden Zungen im Inneren des Lichtgehäuses verlaufen und mit einem nach außen gerichteten, am freien Ende angebrachten Vorsprung in eine Ausnehmung des Lichtgehäuses eingreifen. Nachteilig dabei jedoch ist, daß im Bereich der federnden Zungen auftretende Undichtigkeiten ohne weiteres Zutritt von Feuchtigkeit zum Leuchteninnenraum gewähren und dabei die Lebensdauer von Glühlampe und dem eventuell vorhandenen Reflektor beeinträchtigen.

Es ist deshalb Aufgabe der Erfindung, eine außen am Kraftfahrzeug anbringbare Leuchte so zu gestalten, daß ein öffnen und Schließen des Leuchtengehäuses durch Abnehmen des Gehäuseoberteils zum Wechsel der Glühlampe ohne Verwendung von separaten Verbindungsmitteln auch für den Nichtfachmann möglich ist, und daß dabei trotzdem ein gegen Schmutz und eindringendes Wasser abgedichteter Innenraum um die Glühlampe gewährleistet ist.

Diese Aufgabe wird erfindungsgemäß durch folgende Merkmale gelöst:
- in die kurzen Seitenwandungen des Gehäuseoberteils sind zwei zueinander parallel verlaufende Schlitze eingebracht,
- die durch die Schlitze gebildeten Zungen weisen an ihren freien Enden die Verhakungs- und/oder Verrastungsmittel auf, die im Zusammenwirken mit den entsprechenden Verrastungs- und/oder Verhakungsmitteln im Rand des Gehäuseunterteils die lösbare Verbindung eingehen,
- zwischen den langen Seitenwänden des Gehäuseoberteils sind Verbindungswände eingebracht, die nahe den Verrastungs- und/oder Verriegelungsmitteln verlaufen,
- die Verbindungswände ergeben im Zusammenwirken mit den langen Seitenwänden des Gehäuseoberteils eine Abkammerung des Innenraumes der Leuchte,
- die Abkammerung setzt sich über einen am Gehäuseunterteil befindlichen, aufragenden Steg fort.

In einer vorteilhaften Ausführung der Erfindung ist die Zunge derart mit einer Vorspannung behaftet, daß sie im verriegelten Zustand bündig mit der Oberfläche des Gehäuseoberteils verläuft und somit die Leuchte ein in seiner äußeren Erscheinung gefälliges Bild bietet, bei dem sich keine Schmutznester bilden können, da keine Unebenheiten vorhanden sind.

In weiteren Ausführungen hat es sich vorteilhaft erwiesen, daß die den Innenraum begrenzenden Wände des Gehäuseoberteils sich an ihrem freien Rand konisch verjüngen und der umlaufende Steg des Gehäuseunterteils sich zu seinem freien Rand hin konisch verjüngt. Dadurch ist es möglich, wie aus Anspruch 5 vorteilhaft hervorgeht, daß beide Gehäuseteile im verriegelten Zustand bündig aneinander liegen und somit eine hinreichende Dichtigkeit im Raum um die Glühlampe gewährleisten.

Die Erfindung wird nachstehend an Hand einer Zeichnung näher erläutert. Es zeigt:

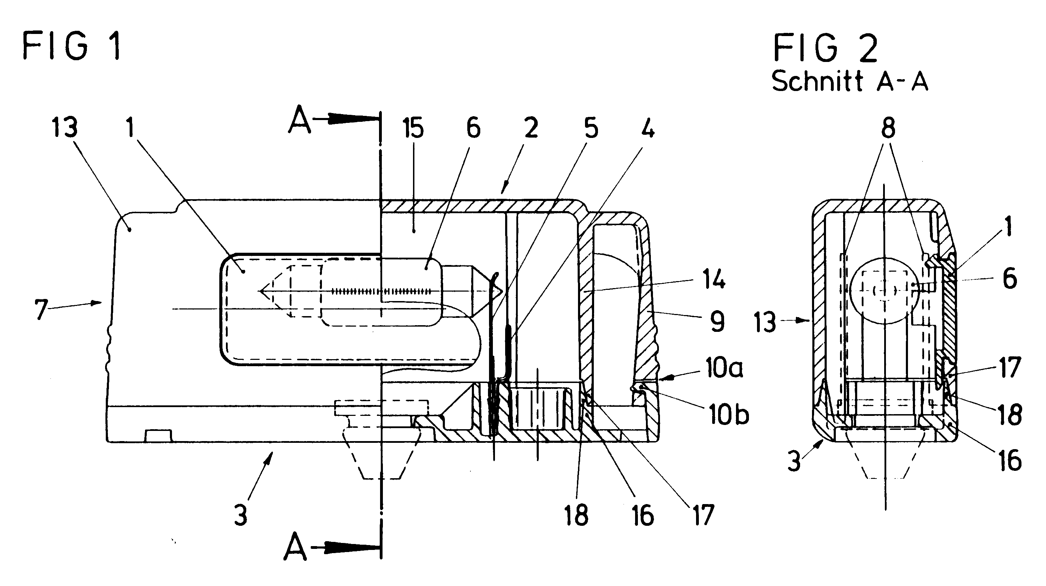

Figur 1 die Leuchte im Halbschnitt,
Figur 2 die Leuchte im Schnitt gemäß der Linie A-A.

In der Zeichnung ist eine rechteckförmige Kennzeichenleuchte dargestellt, die aus einem eine Lichtscheibe (1) rastbar aufnehmenden Gehäuseoberteil (2) besteht und einem die Leuchte von hinten verschließenden Gehäuseunterteil (3). Das Gehäuseunterteil nimmt elektrische Anschlüsse (4) und Kontaktteile (5) für eine Glühlampe (6) auf. In die kurzen Seitenwandungen (7) des Gehäuseoberteils (2) sind jeweils zwei zueinander parallel verlaufende Schlitze (8) eingebracht. Beide Schlitze (8) ergeben jeweils eine Zunge (9), die an ihrem freien Ende Verrastungs- und/oder Verhakungsmittel (10a) aufweist, die mit entsprechenden Verrastungs- und/oder Verhakungsmitteln (10b) im Rand des Gehäuseunterteils (3) lösbar verbunden sind. Das Verrastungs- und/oder Verhakungsmittel (10a) im Gehäuseoberteil (2) entspricht dabei einem am freien Ende der Zunge befindlichen rechteckigen Durchbruch, der in einen am Gehäuseunterteil aufragenden Haken einrastet. Zwischen den langen Seitenwänden (13) des Gehäuseoberteils (2) sind Verbindungswände (14) eingebracht, die zu einer Abkammerung eines Glühlampenraumes (15) führen. Diese Abkammerung wird im Gehäuseunterteil (3) durch einen aufragenden und umlaufenden Steg (16) weitergeführt, der in das Gehäuseoberteil (2) hineinragt. Dabei erweitert sich die Kammer des Glühlampenraumes (15) mit dem Rand ihres offenen Endes (17) konisch, sowie sich der umlaufende Steg (16) des Gehäuseunterteils (3) zu seinem freien Ende (18) konisch verjüngt. Im montierten Zustand der Leuchte liegen beide Enden (17, 18) bündig aneinander und gewährleisten einen dichten Verschluß des Glühlampenraumes (15).

Die Verrastung und/oder Verriegelung vom Gehäuseoberteil (2) mit dem Gehäuseunterteil (3) erfolgt in der Weise, daß man das Gehäuseoberteil (2) von der geschlossenen Schmalseite her mit beispielsweise Daumen und Mittelfinger übergreift, so daß die unter den Fingern zu liegen kommenden Zungen (9) elastisch in die darunger liegenden Hohlräume gedrückt werden können. Nun kann das Aufstecken von Gehäuseoberteil (2) auf das Gehäuseunterteil (3) erfolgen, und durch Loslassen der Zungen (9) schieben sich die am freien Ende der Zunge (9) befindlichen rechteckigen Durchbrüche des Verrastungs- und/oder Verhakungsmittels (10a) auf den am Gehäuseunterteil (3) aufragenden breitflächigen Haken des Verrastungs- und/oder Verriegelungsmittels (10b) bis zu einem Anschlag, bei dem die Zunge (9) auf Grund ihrer elastischen Rückstellkraft bündig zu der Gehäuseoberfläche verharrt.

### Bezugszahlenliste

- (1): Lichtscheibe
- (2): Gehäuseoberteil
- (3): Gehäuseunterteil
- (4): elektr. Anschluß
- (5): Kontaktteile
- (6): Glühlampe
- (7): kurze Seitenwandungen
- (8): Schlitze
- (9): Zunge
- (10a,: Verhakungs- und/oder
- (10b): Verrastungsmittel
- (13): lange Seitenwandung
- (14): Verbindungswände
- (15): Glühlampenraum
- (16): Steg
- (17,: Ende
- (18):

## Patentansprüche

1. Außen am Fahrzeug anbringbare Leuchte, insbesondere Kennzeichenleuchte, mit einem die Lichtscheibe (1) enthaltenden rechteckförmigen Gehäuseoberteil (2) und einem die Leuchte von hinten verschließenden, die elektrischen Anschlüsse (4) und Kontaktteile (5) für die Glühlampe (6) tragenden Gehäuseunterteil (3), wobei die Gehäuseteile durch Verrastungsmittel und auf federnden Zungen angeordneten Verhakungsmittel miteinander lösbar verbunden sind, gekennzeichnet durch folgende Merkmale:
a) in die kurzen Seitenwandungen (7) des Gehäuseoberteils (2) sind zwei zueinander parallel verlaufende Schlitze (8) eingebracht,
b) die durch die Schlitze (8) gebildeten Zungen (9) weisen an ihren freien Enden die Verhakungs- und/oder Verrastungsmittel (10a) auf, die im Zusammenwirken mit den entsprechenden Verrastungs- und/oder Verhakungsmitteln (10b) im Rand des Gehäuseunterteils (3) die lösbare Verbindung eingehen,
c) zwischen den langen Seitenwänden (13) des Gehäuseoberteils (2) sind Verbindungswände (14) eingebracht, die nahe den Verrastungs- und/oder Verriegelungsmitteln (10a, 10b) verlaufen,
d) die Verbindungswände (14) ergeben im Zusammenwirken mit den langen Seitenwänden (13) des Gehäuseoberteils (2) eine Abkammerung des Innenraumes (15) der Leuchte,
e) die Abkammerung setzt sich über einen am Gehäuseunterteil (3) befindlichen, aufragenden Steg (16) fort.

2. Leuchte nach Anspruch 1, dadurch gekennzeichnet, daß in der Zunge (9) eine Vorspannung vorhanden ist, durch die sie im verriegelten Zustand bündig mit der Oberfläche des Gehäuseoberteils (2) verläuft.

3. Leuchte nach Anspruch 1, dadurch gekennzeichnet, daß die den Innenraum (15) begrenzenden Wände des Gehäuseoberteils (2) sich an ihrem freien Rand konisch verjüngen.

4. Leuchte nach Anspruch 1, dadurch gekennzeichnet, daß der umlaufende Steg (16) des Gehäuseunterteils (3) sich zu seinem freien Rand hin konisch verjüngt.

5. Leuchte nach Anspruch 3 und 4, dadurch gekennzeichnet, daß die konisch verlaufenden Enden (17, 18) im verriegelten Zustand beider Gehäuseteile (2, 3) bündig aneinander liegen.

## Claims

1. A lamp which can be mounted externally on a vehicle, particularly a number plate lamp, having a rectangular housing upper part (2) containing the lamp cover lens (1) and a housing lower part (3) which closes the lamp from the back and which carries the electrical connections (4) and contact parts (5) for the incandescent bulb (6), wherein the housing parts are detachably connected to each other by means of latching means and by interlocking means disposed on resilient tongues, characterised by the following features:
a) two slots (8) running parallel to each other are provided in the short sidewalls (7) of the housing upper part (2),
b) the tongues (9) formed by the slots (8) have interlocking or latching means (10a) at their free ends, which enter into the detachable connection in cooperation with the corresponding latching and/or interlocking means (10b) in the edge of the housing lower part (3),
c) connecting walls (14), which extend near the latching and/or locking means (10a, 10b), are provided between the long sidewalls (13) of the housing upper part (2),
d) in cooperation with the long sidewalls (13) of the housing upper part (2), the connecting walls (14) result in the interior space (15) of the lamp being chambered off,
e) the chambering-off continues via an upwardly projecting rib (16) situated on the housing lower part (3).

2. A lamp according to claim 1, characterised in that a prestress is present in the tongue (9), due to which it extends flush with the surface of the housing upper part (2) in the locked state.

3. A lamp according to claim 1, characterised in that the walls of the housing upper part (2) which delimit the interior space (15) diminish in a tapered manner at their free edge.

4. A lamp according to claim 1, characterised in that the encircling rib (16) of the housing lower part (3) diminishes in a tapered manner towards its free edge.

5. A lamp according to claims 3 and 4, characterised in that the tapering ends (17, 18) are seated flush against each other when the two housing parts (2, 3) are in their locked state.

## Revendications

1. Feu d'éclairage à monter sur l'extérieur d'un véhicule, en particulier feu d'éclairage de plaque d'immatriculation, comportant une partie supérieure (2) de boîtier rectangulaire contenant la plaque d'éclairement (1) et une partie inférieure (3) de boîtier fermant le feu par l'arrière et portant les connexions (4) électriques et les éléments de contact (5) pour la lampe à incandescence (6), les parties de boîtier étant reliées l'une à l'autre de manière détachable par des moyens d'encliquetage et des moyens d'accrochage agencés sur des languettes élastiques, caractérisé par les caractéristiques suivantes :
a) dans les parois latérales (7) courtes de la partie supérieure (2) du boîtier sont ménagées deux fentes parallèles (8) l'une à l'autre,
b) les languettes (9) formées par les fentes (8) présentent à leurs extrémités libres les moyens d'accrochage et/ou d'encliquetage (10a) qui coopèrent avec les moyens d'accrochage et/ou d'encliquetage (10b) correspondants situés dans le bord de la partie inférieure (3) du boîtier pour former une liaison détachable,
c) entre les parois latérales (13) longues de la partie supérieure (2) du boîtier sont ménagées des parois de liaison (14) qui s'étendent à proximité des moyens d'accrochage et/ou d'encliquetage (10a, 10b),
d) les parois de liaison (14) forment en coopération avec les parois latérales (13) longues de la partie supérieure (2) du boîtier un cloisonnement de la cavité intérieure (15) du feu d'éclairage,
e) le cloisonnement se poursuit par l'intermédiaire d'un voile (16) en saillie se trouvant sur la partie inférieure (3) du boîtier.

2. Feu d'éclairage selon la revendication 1, caractérisé en ce que la languette (9) est soumise à une précontrainte, grâce à laquelle ladite languette affleure à l'état verrouillé avec la surface de la partie supérieure (2) du boîtier.

3. Feu d'éclairage selon la revendication 1, caractérisé en ce que les parois de la partie supérieure (2) du boîtier délimitant la cavité intérieure (15) se rétrécissent en forme de cône sur leur bord libre.

4. Feu d'éclairage selon la revendication 1, caractérisé en ce que le voile (16) circonférentiel de la partie inférieure (3) du boîtier se rétrécit en forme de cône vers son bord libre.

5. Feu d'éclairage selon les revendications 3 et 4, caractérisé en ce que les extrémités (17, 18) se rétrécissant en forme de cône forment un assemblage en affleurement à l'état verrouillé des deux parties du boîtier (2, 3).
